# EUROPÄISCHE PATENTSCHRIFT

(11) **EP 0 931 695 B1**
(45) Veröffentlichungstag und Bekanntmachung des Hinweises auf die Patenterteilung: **02.06.2004**
(21) Anmeldenummer: 99101192.5
(22) Anmeldetag: 22.01.1999
(51) Int. Cl.: B60N 2/48

(54) **Kopfstütze für Fahrzeugsitze**
Headrest for vehicle seat
Appui-tête pour sièges de véhicules

(30) Priorität: 24.01.1998 DE 19802515
(43) Veröffentlichungstag der Anmeldung: 28.07.1999
(73) Patentinhaber: GRAMMER Automotive GmbH, 92224 Amberg (DE)
(72) Erfinder: Schäfers, Andreas, 40764 Langenfeld (DE); Hentschel, Bernd, 51491 Overath (DE)
(74) Vertreter: Patentanwälte Ostriga & Sonnet

(56) Entgegenhaltungen:
- EP-A- 0 267 503
- DE-A- 19 628 861
- DE-A- 19 632 560

## Beschreibung

Die Erfindung betrifft eine Kopfstütze für Fahrzeugsitze entsprechend dem Oberbegriff des Anspruchs 1. Eine derartige Kopfstütze in der DE-A1-196 28 861 beschrieben.

Bei der bekannten Kopfstütze ist der Einsteckbereich der Tragstange in einer Gleithülse aufgenommen. Der Einsteckbereich der Tragstange weist eine Anzahl von in Axialrichtung voneinander distanzierter Rastkerben, Rastnuten od.dgl. auf, welche mit einem von der Gleithülse gehaltenen Arretierelement, wie z. B. mit einem Schieber oder mit einer Rastfeder, lösbar arretierend zusammenwirken.

Gemäß der DE-A1-196 28 861 ist die Gleithülse ihrerseits in einem in der Sitzlehne festgelegten hülsenartigen Führungsteil axial beweglich, insbesondere auf- und abbeweglich und arretierbar aufgenommen. Wenn die Sitzlehne, beispielsweise eines Vordersitzes, nach vorn geklappt werden soll und die Kopfstütze dabei die Schwenkbewegung der Sitzlehne behindert, wird bei der bekannten Kopfstütze eine Verriegelung der Gleithülse gelöst, so daß letztere einschließlich der mit ihr über den Einsteckbereich der Tragstange verrasteten Kopfstütze relativ zu dem hülsenartigen Führungsteil entgegen einer Federrückstellkraft axial nach unten bewegt werden kann. Einen besonderen Hinweis für die Ausgestaltung eines diesbezüglichen Bewegungsantriebs vermittelt die DE-A1-196 28 861 nicht.

Sobald die Sitzlehne gemäß der DE-A1-196 28 861 in ihre aufrechte Position zurückversetzt ist, kann sich die Gleithülse einschließlich der mit ihr verrasteten Kopfstütze mit Hilfe der vorerwähnten Federrückstellkraft wieder axial nach oben in ihre ausgefahrene Rastlage zurückbewegen.

Gemäß der DE 80 09 153 U1, die eine nicht zur engeren Gattung zählende höhenverstellbare Kopfstütze für einen Fahrzeugsitz beschreibt, sind die Einsteckbereiche zweier Tragstangen an einer mittels eines Gewindetriebs höhenverstellbaren Traverse verrastet und im übrigen an zwei mit ihren Längsöffnungen einander zugekehrten Halbschalen eines in der Sitzlehne befestigten Rahmens unmittelbar gleitgeführt. Die Kopfstütze entsprechend der DE 80 09 153 U1 erfordert einen erheblichen baulichen Aufwand.

Ausgehend von der Kopfstütze gemäß der DE-A1-196 28 861, liegt der Erfindung die Aufgabe zugrunde, die bekannte Kopfstütze so weiterzuentwickeln und die Voraussetzung dafür zu schaffen, daß die Kopfstütze mit einem verhältnismäßig einfachen baulichen Aufwand auch mit einem Antrieb versehen werden kann.

Entsprechend der Erfindung wird diese Aufgabe dadurch gelöst, daß von der Gleithülse ein Mitnehmervorsprung gehalten ist, welcher das Führungsteil in einem Axialschlitz durchsetzt, wobei der Mitnehmervorsprung mittels eines Antriebs in Axialrichtung hin- und herbewegbar und in seiner an einem oberen bzw. äußeren Anschlag anliegenden Position mittels eines sitzlehnenseitig gehaltenen Riegels lösbar zu arretieren ist.

Entsprechend der Erfindung weist die Gleithülse einen quer zur Axialrichtung vorragenden Mitnehmervorsprung auf, welcher das Führungsteil in einem Axialschlitz bis nach außen hin quer durchsetzt und dort die Möglichkeit eines Antriebs bietet. Auf diese Weise kann die die Tragstange (und damit die Kopfstütze) tragende Gleithülse mit einem verhältnismäßig geringen Bauaufwand über den Mitnehmervorsprung hin und her bzw. auf und ab bewegt werden.

In der Praxis läßt sich die erfindungsgemäße Kopfstütze überall dort anwenden, wo eine sitzlehnenseitige Höhenverstellung generell mit einem Antrieb, und sei es nur mit einem externen Handantrieb, ausgestattet sein soll.

Die erfindungsgemäße Kopfstütze läßt sich vornehmlich im Zusammenhang mit klappbaren Sitzlehnen insbesondere dann anwenden, wenn es sich um Fondsitze handelt, deren in ihrer maximalen Höhenposition befindliche Kopfstützen ein Vorklappen der Sitzlehne behindern würden.

Um mit einem relativ geringen Aufwand die vom Fahrzeuginsassen individuell eingestellte Höhenlage der Kopfstütze nach jeder Höhenverstellbewegung der Gleithülse genau reproduziert wieder zu erreichen, ist in weiterer Ausgestaltung der Erfindung vorgesehen, daß der Mitnehmervorsprung zwischen zwei voneinander distanzierten Axialanschlägen bewegbar ist.

Eine besonders einfache Bauart, die Axialanschläge zu verwirklichen, besteht darin, daß der Axialschlitz sich nur über eine axiale Teillänge des Führungsteils erstreckt, und daß der Axialschlitz zwei mit seiner Axialschlitzlänge voneinander distanzierte Axialanschläge für den von der Gleithülse gehaltenen Mitnehmervorsprung bildet, von denen der eine Anschlag der untere bzw. innere Anschlag und der andere der obere bzw. äußere Axialanschlag ist.

Eine bevorzugte Erfindungsvariante besteht darin, daß in demselben Querschnitt des Führungsteils die Umfangserstrekkung des Axialschlitzes geringer ist als der ungeschlitzte Umfangsbereich des Führungsteils. Dies bedeutet, daß der Querschnitt des Führungsteils auch im Bereich des Axialschlitzes hinterschnitten ist, sich also die Tragstange nahezu über deren gesamten Umfang seitlich bzw. radial abstützen kann.

Ein besonders widerstandsfähiges Führungsteil wird erfindungsgemäß dann erzielt, wenn die an die beiden Axialanschläge angrenzenden Axialbereiche des Führungsteils jeweils einen in Umfangsrichtung geschlossen Querschnitt aufweisen.

Die Bewegung der Gleithülse vollzieht sich zweckmäßig derart, daß der Mitnehmervorsprung mittels Handantrieb über ein außen an der Sitzlehne angeordnetes Betätigungselement, wie Betätigungshebel oder Betätigungsschieber, bewegbar ist.

Eine Erfindungsvariante besteht darin, daß der Mitnehmervorsprung in seiner am oberen bzw. äußeren Anschlag anliegenden Position mittels eines sitzlehnenseitig gehaltenen Riegels lösbar zu arretieren ist, wobei dieser Riegel als ein den Mitnehmervorsprung mit einer Riegelaussparung untergreifender Schwenkriegel ausgebildet sein, kann.

Um mit zusätzlicher Sicherheit zu gewährleisten, daß der Riegel die Gleithülse in ihrer hohen Verstellposition sicher arretieren kann, ist der Riegel nur entgegen Federrückstellkraft entriegelbar.

Eine einfache zusammenfassende Bauweise wird dadurch erzielt, daß der Riegel unter Zwischenschaltung einer mechanischen Verbindung mittels des bereits erwähnten Betätigungselements betätigbar ist, mit welchem auch der Mitnehmervorsprung bewegt werden kann.

Die mechanische Verbindung stellt dabei vorteilhaft ein Steuerglied dar, welches den Riegel nur in Entriegelungsrichtung betätigt.

Eine besonders sinnvolle konstruktive Ausgestaltung besteht erfindungsgemäß darin, daß der als Schwenkriegel ausgebildete Riegel eine Steuerfläche aufweist, mit welcher eine Gegensteuerfläche des Steuergliedes im Entriegelssinne des Schwenkriegels zusammenwirkt. Sobald also das Steuerglied betätigt wird, gleitet dessen Gegensteuerfläche an der Steuerfläche des Schwenkriegels entlang und schwenkt diesen in die Entriegelungsstellung. Dadurch wird der Mitnehmervorsprung freigegeben, so daß sich die die Kopfstütze tragende Gleithülse nach unten bewegen kann.

Das Steuerglied bildet zweckmäßig einen Hebel, insbesondere einen Steuerhebel in Form eines zweiarmigen Hebels.

Wie bereits erwähnt, sieht die Erfindung vor, daß die zwischen dem Betätigungselement und dem Riegel befindliche mechanische Verbindung auch der Bewegung des Mitnehmervorsprungs dient. Die mechanische Verbindung wird dabei ebenfalls von dem Steuerglied gebildet. Dieses kann jedoch den Mitnehmervorsprung nur zu seinem oberen bzw. äußeren Anschlag hin bewegen. Konstruktiv werden diese Merkmale dadurch verwirklicht, daß das Steuerglied über eine Formschlußaufnahme, welche den Mitnehmervorsprung untergreift, mit letzterem lediglich druckfest gekuppelt ist.

Wie bereits voraufgehend erwähnt, kann die Erfindung besonders vorteilhaft bei klappbaren Sitzlehnen, insbesondere von Fondsitzen, angewendet werden. Dazu sieht die Erfindung vor, daß im Zusammenhang mit einer die Kopfstütze tragenden klappbaren Sitzlehne die Antriebsbewegung für den Mitnehmervorsprung (ggf. unter Einbeziehung des Antriebs für den Riegel), insbesondere für die den Mitnehmervorsprung betätigende mechanische Verbindung, wie z.B. für das Steuerglied, von der Klappbewegung der Sitzlehne abgeleitet ist.

Da derartige klappbare Sitzlehnen regelmäßig mit einem Sitzlehnen-Riegelgriff versehen sind, macht sich die Erfindung diese technische Voraussetzung dadurch zunutze, daß das Betätigungselement von einem Sitzlehnen-Riegelgriff gebildet ist, welcher sowohl die mechanische Verbindung, insbesondere das Steuerglied, als auch ein zwischen Sitz und klappbarer Sitzlehne wirksames Riegelglied betätigt.

Entsprechend der Erfindung hat demnach der Sitzlehnen-Riegelgriff eine Doppelfunktion, die einmal darin besteht, den Riegel vom Mitnehmervorsprung und zugleich die Riegelverbindung zwischen Sitzlehne und Sitz zu lösen und andererseits mit einer Gegenbewegung Mitnehmervorsprung und Gleithülse (und damit auch die Kopfstütze) in die ausgefahrene Höhenposition zurückzuversetzen.

Eine zweckmäßige Möglichkeit, die Sitzlehnen-Verriegelung mit der Entriegelung und Betätigung des Mitnehmervorsprungs zu verbinden, besteht darin, daß das Riegelglied eine am Fuß der Sitzlehne gelagerte Drehfalle, insbesondere Gabelfalle bildet, welche mit einem am Sitz befestigten Schließbolzen zusammenwirkt, und daß von der Drehbewegung der Drehfalle die Betätigungsbewegung der mechanischen Verbindung, insbesondere des Steuergliedes, abgeleitet ist. Zweckmäßig ist dabei das Steuerglied, wie z.B. der Steuerhebel, mittels eines Lenkers mit der Drehfalle bewegungsverbunden.

Wenn also die Sitzlehne aus ihrer vorgeklappten Lage, in welcher sich die Gleithülse in ihrer untersten Stellung relativ zum Führungsteil befindet, zurückgeklappt wird, stößt die Gabelfalle erst in der Endphase der Zurückklapp-Bewegung mit einer Steuernase gegen den am Sitz befestigten Scließbolzen und wird dabei in ihre Schließlage hineingedreht, in welcher sie sich am raumfesten Schließbolzen, diesen mit ihrer Riegelöffnung umgreifend, verriegelt. Diese Drehbewegung der Dreh- bzw. Gabelfalle wird über einen Lenker auf das Steuerglied, wie z.B. auf den Steuerhebel, übertragen, welcher den Mitnehmervorsprung, und damit die Kopfstütze, in ihre angehobene Position zurückversetzt.

Die Erfindung ist grundsätzlich unabhängig davon, wieviele Tragstangen eine Kopfstütze besitzt. Die Erfindung kann selbstverständlich auch dann angewandt werden, wenn die Kopfstütze nur an einer Tragstange geführt ist. Die überwiegende Anzahl von Kopfstützen ist indessen mit zwei Tragstangen versehen, für welche die Erfindung jeweils eine ein Führungsteil und eine Gleithülse aufweisende Doppelanordnung vorsieht, bei welcher beide zueinander weisenden, jeweils einen Axialschlitz eines Führungsteils durchsetzenden, Mitnehmervorsprünge zu einer die beiden Gleithülsen miteinander verbindenden Mitnehmertraverse vereinigt sind. Eine solche Mitnehmertraverse ist,wie bereits erwähnt, von einer nicht zur engeren Gattung zählenden Kopfstütze an sich bekannt (vgl. DE 80 09 153 U1).

In den Zeichnungen ist ein bevorzugtes Ausführungsbeispiel entsprechend der Erfindung dargestellt, es zeigt,
Fig. 1 in zum Teil schematischer Darstellung einen Teilschnitt durch den oberen Bereich des Traggestells einer Sitzlehne mit darin befestigten Führungshülsen und mit einer mechanischen Betätigungsvorrichtung für zwei jeweils eine Kopfstützen-Tragstange aufnehmende, auf und ab bewegliche Gleithülsen,
Fig. 2 einen teilweisen Schnitt entsprechend der in Fig. 1 mit II-II bezeichneten Schnittlinie; in dieser Darstellung ist die Verriegelung eines Mitnehmervorsprungs in seiner hochgefahrenen Stellung gezeigt,
Fig. 3 die Anordnung gemäß Fig. 2 unmittelbar nach der Entriegelung eines Schwenkhebels und
Fig. 4 die Anordnung gemäß den Fig. 2 und 3, wobei ein den Mitnehmervorsprung untergreifender Steuerhebel sich auf dem Weg zurück nach oben in die Ausgangsposition gemäß Fig. 2 befindet.

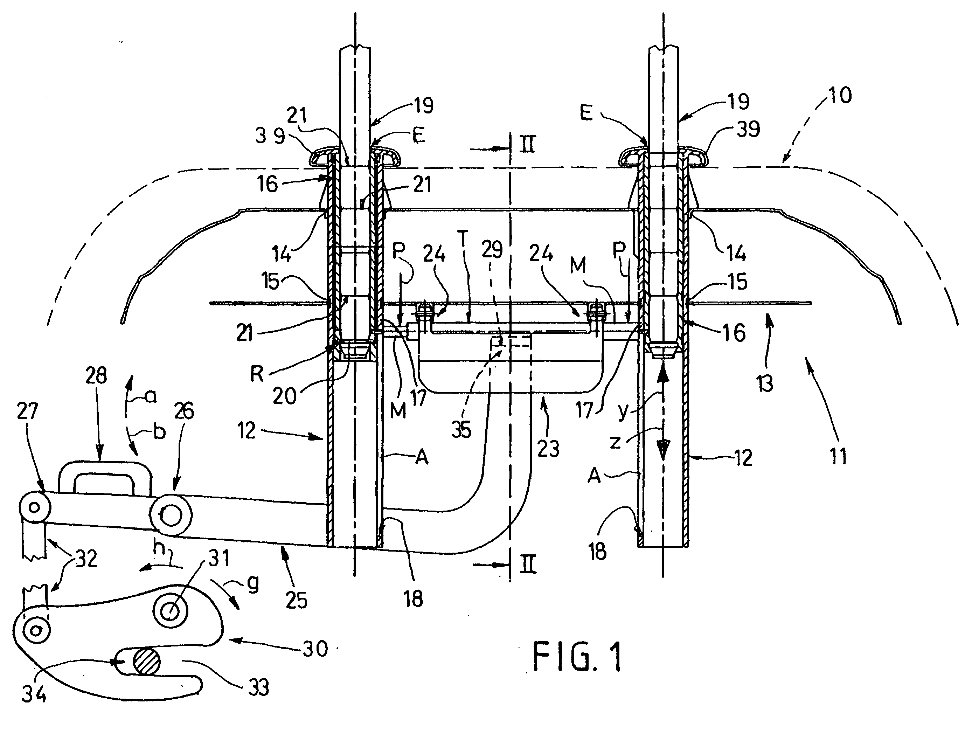

In Fig. 1 ist die obere Kontur einer Sitzlehne 10 mit einer Strichlinie angedeutet. Vom Traggestell 11 der Sitzlehne 10 ist nur der obere Querholm 13 zu sehen, welcher öffnungen 14, 15 aufweist, in welchen Führungshülsen 12 befestigt sind.

In jeder Führungshülse 12 ist eine Gleithülse 16 aufgenommen, die jeweils nach oben in Richtung y oder nach unten in Richtung z bewegbar ist.

Das Führungsteil 12 bildet benachbart dem Scheitel der Sitzlehne 10 einen etwa flanschartigen Kragen 39.

Jede Führungshülse 12 weist zwischen einem oberen Axialanschlag 17 und einem unteren Axialanschlag 18 je einen Axialschlitz A auf. Unten in den Gleithülsen 16 befestigte Mitnehmervorsprünge M durchgreifen jeweils einen Axialschlitz A radial. Die beiden einander entgegengerichteten Mitnehmervorsprünge M sind dabei in einer gemeinsamen Traverse T vereinigt.

Es ist vorstellbar, daß die Traverse T gemeinsam mit den an ihr endständig befestigten beiden Gleithülsen 16 entlang den Richtungen y (nach oben) und z (nach unten) bewegbar ist. Bewegungseinheitlich mit jeweils einer Gleithülse 16 verbunden, ist jeweils eine Tragstange 19. Beide Tragstangen 19 sind gemeinsam in einem nicht dargestellten Kopfkasten einer Kopfstütze ggf. unter Einbeziehung einer Neigeverstellagerung befestigt.

Federrückstellkräfte P, beispielsweise in Form von Zug- oder Druckfedern, belasten die Traverse T in Richtung z nach unten. Bei Freigabe der in ihrer höchsten Position gemäß Fig. 1 arretierten Traverse T kann diese demnach einschließlich der an den Tragstangen 19 befestigten Kopfstütze, unterstützt durch die Federrückstellkraft P, bei Einwirkung der Schwerkraft so weit nach unten gleiten, bis die Mitnehmervorsprünge M gegen die unteren Axialanschläge 18 stoßen.

In der linken Bildhälfte gemäß Fig. 1 ist eine Rastfeder R angedeutet, welche in der Gleithülse 16 zwar axial festgelegt, jedoch in Radialrichtung federnd beweglich ist. Gemäß Fig. 1 greift die Rastfeder R in eine Rastnut 20 ein und verhindert so, daß die Tragstange 19 ungewollt in Richtung y nach oben aus der Gleithüse 16 herausgezogen werden kann.

Andererseits kann die Tragstange 19 entsprechend den individuellen Wünschen eines Fahrgastes in Richtung z stufenweise nach unten und zurück nach oben verschoben werden, wobei die Rastfeder R mit jeweils einer Verstellkerbe 21 kooperiert.

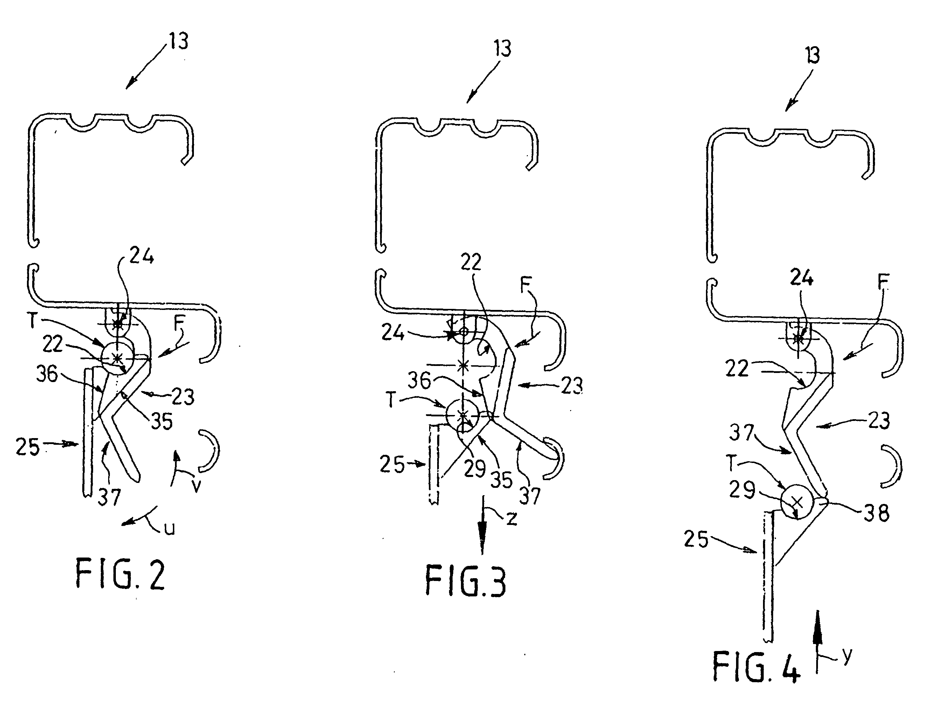

Die Funktion der in Fig. 1 gezeigten Anordnung soll nun auch in Verbindung mit den Fig. 2-4 erläutert werden:

Gemäß den Fig. 1 und 2 befindet sich die Traverse T in ihrer bezüglich der Richtung y höchsten Position und ist dabei innerhalb der Riegelöffnung 22 des Schwenkriegels 23 arretiert. Der Schwenkriegel 23 ist mittels eines Drehlagers 24 unterseitig des Querholms 13 schwenkbar an diesem angeordnet.

Die Verriegelungsrichtung des Schwenkriegels 23 ist mit u bezeichnet; die Entriegelungsrichtung des Schwenkriegels 23 ist mit v bezeichnet. Die Schwenkebene des Schwenkriegels 23 erstreckt sich parallel zur Zeichnungsebene der Fig. 2-4. Der Schwenkriegel 23 ist durch eine Federrückstellkraft F, beispielsweise durch eine am Drehlager 24 angeordnete Schenkelfeder (nicht dargestellt), in Verriegelungsrichtung u belastet.

Die Schwenkebene eines als zweiarmiger Hebel ausgebildeten Steuerhebels 25 erstreckt sich gemäß Fig. 1 parallel zur Zeichnungsebene. Entsprechend den Fig. 2-4 erstreckt sich die Schwenkebene des Steuerhebels 25 senkrecht zur Zeichnungsebene.

Der Steuerhebel 25 ist in einem Drehlager 26 am Traggestell 11 der Sitzlehne 10 schwenkgelagert. Am Bedienungsarm 27 des Steuerhebels 25 ist ein Sitzlehnen-Riegelgriff 28 schematisch angedeutet. Der Sitzlehnen-Riegelgriff 28 kann entlang der Schwenkrichtung a hochgehoben und entlang der entgegengesetzten Schwenkrichtung b niedergedrückt werden.

Im Zusammenhang der Fig. 1-4 ist vorstellbar, daß der Steuerhebel 25 die Traverse T mit einer Formschlußaufnahme 29 nur druckfest untergreift.

Wenn die Sitzlehne 10 nach vorn geklappt werden soll (die unterschiedliche Neigung der klappbaren Sitzlehne 10 geht aus den Fig. 2-4 nicht hervor), wird der Sitzlehnen-Riegelgriff 28 in Richtung a angehoben.

Das Anheben des Sitzlehnen-Riegelgriffs 28 in Richtung a hat zunächst zur Folge, daß eine über ein Drehlager 31 am Traggestell 11 der Sitzlehne 10 angeordnete Gabelfalle 30 in Richtung g gedreht (d.h. geöffnet) wird, weil das freie Ende des Bedienungsarms 27 des Steuerhebels 25 über einen Lenker (Koppel) 32 mit dem freien Ende der Gabelfalle 30 wirkungsverbunden ist.

Bei der Entriegelungsdrehung der Gabelfalle 30 in Richtung g gerät die Riegelöffnung 33 der Gabelfalle 30 außer Eingriff mit dem am Sitzgestell (nicht dargetellt) befestigten Schließbolzen 34, so daß die Sitzlehne 10 entriegelt ist und demnach in Fahrtrichtung nach vorn geklappt werden kann.

Zugleich mit dem Anheben des Sitzlehnen-Riegelgriffs 28 in Richtung a bewegt sich der Steuerhebel 25 mit seiner Formschlußaufnahme 29 nach unten in Richtung z. Dabei fährt der Steuerhebel 25 mit einer Gegensteuerfläche 35 entlang der oberen Steuerfläche 36 des Schwenkriegels 23 und verschwenkt so den Schwenkriegel 23 in Entriegelungsrichtung v. Folglich gleitet die Traverse T aus der Riegelöffnung 22 des Schwenkriegels 23, so daß sich die Traverse T, der Bewegung des Steuerhebels 25 folgend, in Richtung z nach unten bewegen kann bzw. die Traverse T nach unten fallen kann und dabei über eine Zwischenstellung (Fig. 3) die tiefste Stellung (Fig. 4) erreicht.

Wenn sich die Sitzlehne 10 in vorgeklappter Position befindet, wird die Gabelfalle 30 mittels einer Feder (nicht gezeigt) in ihrer in Richtung g verschwenkten Öffnungslage gehalten, was in Fig. 1 nicht dargestellt ist. Dies bedeutet auch, daß wegen der Bewegungsverbindung des Lenkers 32 mit der sich in der Entriegelungsposition befindenden Gabelfalle 30 zugleich die Konstellation der Bauteile 23, 25, T, gemäß Fig. 4 vorhanden ist.

Wenn nun die Gabelfalle 30 in ihre Verriegelungsstellung gemäß Fig. 1 zurückversetzt werden soll, geschieht dies etwa wie folgt:

Beim Zurückklappen der Sitzlehne 10 nähert sich die Gabelfalle 30 von oben her mit ihrer Riegelöffnung 33 dem Schließbolzen 34. Sobald die die Riegelöffnung 33 bildenden Begrenzungflächen der Gabelfalle 30 auf den Schließbolzen 34 stoßen (was erst in der nahezu gänzlich zurückgeklappten Position der Sitzlehne 10 geschieht), dreht sich die Gabelfalle 30 zwangsläufig zurück in Drehrichtung h, so daß die Schließlage gemäß Fig. 1 erreicht wird.

Da das freie Ende der sich in Richtung h drehenden Gabelfalle 30 den Lenker 32 und den Bedienungsarm 27 des Steuerhebels 25 nach unten in Richtung b verschwenkt, bewegt sich der Steuerhebel 25 mit seiner Formschlußaufnahme 29 nach oben in Richtung y und drückt dabei die Traverse T ebenfalls nach oben. Zugleich gleitet der Steuerhebel 25 mit seiner Steuernase 38 entlang einer unteren Steuerfläche 37 des Schwenkriegels 23, verschwenkt letzteren zunächst entgegen der Federrückstellkraft F in Entriegelungsrichtung v bis schließlich über die Zwischenphase gemäß Fig. 3 die in Fig. 2 dargestellte Ausgangsposition erreicht ist.

Gemäß Fig. 2 ist die Traverse T also wiederum in der Riegelöffnung 22 des Schwenkriegels 23 aufgenommen, wobei die Tragstangen 19 (und damit die ebenfalls nicht gezeigte Kopfstütze) ihre höchste Verstellposition gemäß Fig. 1 erreicht haben.

Die Drehebene der Gabelfalle 30 erstreckt ich gemäß Fig. 1 parallel zur Zeichnungsebene. Der Praxis entsprechend erstreckt sich die Drehebene der Gabelfalle 30 überwiegend senkrecht zur Zeichnungsebene, was jedoch im Hinblick auf den beschriebenen Funktionsablauf ohne Bedeutung ist.

Ergänzend ist noch zu erwähnen, daß die Verstellbewegung der Gleithülsen 16 in den Richtungen y und z eine vom Fahrzeuginsassen eingestellte axiale Relativposition zwischen der Rastfeder R und den Rastkerben 20, 21 der Tragstange 19 nicht beeinflußt.

Die gezeigte Verstellvorrichtung wird, soweit es zweckmäßig ist, weitestgehend unter Verwendung von Kunststoff-Spritzgußteilen (z.B. Führungsteil 12 und Gleithülse 16) hergestellt.

## Patentansprüche

1. Kopfstütze für Fahrzeugsitze mit mindestens einer einen Polsterträger haltenden Tragstange (19), deren Einsteckbereich (E) in einem in einer Sitzlehne (10) gehaltenen Führungsteil (12) aufgenommen ist, wobei der Einsteckbereich (E) der Tragstange (19) in einer Gleithülse (16) aufgenommen und relativ zur Gleithülse (16) axial verstellbar und in axialen Verstellpositionen lösbar arretierbar ist, wobei die Gleithülse (16) ihrerseits in dem in der Sitzlehne (10) festgelegten Führungsteil (12) axial beweglich und arretierbar aufgenommen ist, **dadurch gekennzeichnet, daß** von der Gleithülse (16) ein Mitnehmervorsprung (M) gehalten ist, welcher das Führungsteil (12) in einem Axialschlitz (A) durchsetzt, wobei der Mitnehmervorsprung (M) mittels eines Antriebs (bei 28) in Axialrichtung (y, z) hin- und herbewegbar und in seiner an einem oberen bzw. äußeren Anschlag (17) anliegenden Position mittels eines sitzlehnenseitig gehaltenen Riegels (23) lösbar zu arretieren ist.

2. Kopfstütze nach Ansprüch 1, **dadurch gekennzeichnet, daß** der Axialschlitz (A) sich nur über eine axiale Teillänge des Führungsteils (12) erstreckt, und daß der Axialschlitz (A) zwei mit seiner Axialschlitzlänge voneinander distanzierte Axialanschläge (17, 18) für den von der Gleithülse (16) gehaltenen Mitnehmervorsprung (M) bildet, von denen der eine Anschlag der untere bzw. innere Äxialanschlag (17) und der andere der obere bzw. äußere Axialanschlag (18) ist.

3. Kopfstütze nach Ansprüch 1 oder nach Anspruch 2, **dadurch gekennzeichnet, daß** in demselben Querschnitt des Führungsteils (12) die Umfangserstreckung des Axialschlitzes (A) geringer ist als der ungeschlitzte Umfangsbereich des Führungsteils (12).

4. Kopfstütze nach Anspruch 2 oder nach Anspruch 3, **dadurch gekennzeichnet, daß** die an die beiden Axialanschläge (17, 18) angrenzenden Axialbereiche des Führungsteils (12) jeweils einen in Umfangsrichtung geschlossenen Querschnitt aufweisen.

5. Kopfstütze nach einem der Ansprüche 1 bis 4, **dadurch gekennzeichnet, daß** der Axialschlitz (A) sich überwiegend im unteren bzw. inneren Axialbereich des Führungsteils (12) befindet.

6. Kopfstütze nach einem der Ansprüche 1 bis 5, **dadurch gekennzeichnet, daß** der Mitnehmervorsprung (M) mittels Handantrieb über ein außen an der Sitzlehne (10) angeordnetes Betätigungselement (28), wie Betätigungshebel oder Betätigungsschieber, bewegbar ist.

7. Kopfstütze nach Anspruch 1, **dadurch gekennzeichnet, daß** der Riegel ein den Mitnehmervorsprung (M) mit einer Riegelaussparung (22)untergreifender Schwenkriegel (23) ist.

8. Kopfstütze nach Anspruch 7 **dadurch gekennzeichnet, daß** der Riegel (23) entgegen Federrückstellkraft (F) entriegelbar ist.

9. Kopfstütze nach Ansprüch 7 oder nach Anspruch 8, **dadurch gekennzeichnet, daß** der Riegel (23) unter Zwischenschaltung einer mechanischen Verbindung (25) mittels des Betätigungselements (28) betätigbar ist.

10. Kopfstütze nach Anspruch 9, **dadurch gekennzeichnet, daß** die mechanische Verbindung ein Steuerglied (25) ist, welches den Riegel (23) nur in Entriegelungsrichtung (v) betätigt.

11. Kopfstütze nach Anspruch 10, **dadurch gekennzeichnet, daß** der als Schwenkriegel (23) ausgebildete Riegel eine Steuerfläche (36) aufweist, mit welcher eine Gegensteuerfläche (35) des Steuergliedes (25) im Entriegelungssinne des Schwenkriegels (23) zusammenwirkt.

12. Kopfstütze nach Anspruch 11, **dadurch gekennzeichnet, daß** das Steuerglied mindestens einen Hebel (25) bildet.

13. Kopfstütze nach Anspruch 12, **dadurch gekennzeichnet, daß** das Steuerglied einen Steuerhebel (25) in Form eines zweiarmigen Hebels bildet.

14. Kopfstütze nach einem der Ansprüche 9 bis 13, **dadurch gekennzeichnet, daß** die zwischen dem Betätigungselement (28) und dem Riegel (23) befindliche mechanische Verbindung (25) auch der Betätigung des Mitnehmervorsprungs (M) dient.

15. Kopfstütze nach einem der Ansprüche 9 bis 14, **dadurch gekennzeichnet, daß** die der Betätigung des Mitnehmervorsprungs (M) dienende mechanische Verbindung ebenfalls von dem Steuerglied (25) gebildet ist, welches den Mitnehmervorsprung (M) nur zu seinem oberen bzw. äußeren Anschlag (17) hin bewegt.

16. Kopfstütze nach Anspruch 15, **dadurch gekennzeichnet, daß** das Steuerglied (25) über eine Formschlußaufnahme (29), welche den Mitnehmervorsprung (M) untergreift, mit letzterem lediglich druckfest gekuppelt ist.

17. Kopfstütze nach einem der Ansprüche 6 bis 16, **dadurch gekennzeichnet, daß** im Zusammenhang mit einer die Kopfstütze tragenden klappbaren Sitzlehne (10) die Antriebsbewegung für den Mitnehmervorsprung (M), insbesondere für die den Mitnehmervorsprung (M) betätigende mechanische Verbindung, wie z.B. für das Steuerglied (25), von der Klappbewegung der Sitzlehne (10) abgeleitet ist.

18. Kopfstütze nach einem der Ansprüche 6 bis 17, **dadurch gekennzeichnet, daß** im Zusammenhang mit einer die Kopfstütze tragenden klappbaren Sitzlehne (10) das Betätigungselement von einem Sitzlehnen-Riegelgriff (28) gebildet ist, welcher sowohl die mechanische Verbindung, insbesondere das Steuerglied (25), als auch ein zwischen Sitz (bei 34) und klappbarer Sitzlehne (10) wirksames Riegelglied (30) betätigt.

19. Kopfstütze nach Anspruch 18, **dadurch gekennzeichnet, daß** das Riegelglied eine am Fuß der Sitzlehne (10) gelagerte Drehfalle (30), insbesondere Gabelfalle, bildet, welche mit einem am Sitz befestigten Schließbolzen (34) zusammenwirkt, und daß von der Drehbewegung der Drehfalle (30) die Betätigungsbewegung der mechanischen Verbindung, insbesondere des Steuergliedes (25), abgeleitet ist.

20. Kopfstütze nach Anspruch 19, **dadurch gekennzeichnet, daß** das Steuerglied, wie z.B. der Steuerhebel (25), mittels eines Lenkers (32) mit der Drehfalle (30) bewegungsverbunden ist.

21. Kopfstütze nach einem der Ansprüche 1 bis 20, **gekennzeichnet durch** eine zwei Tragstangen (19) mit jeweils einem Führungsteil (12) und einer Gleithülse (16) aufweisende Doppelanordnung (s.Fig. 1), bei welcher beide zueinander weisenden, jeweils einen Axialschlitz (A) eines Führungsteils (12) durchsetzenden, Mitnehmervorsprünge (M) zu einer die beiden Gleithülsen (16) miteinander verbindenden Mitnehmertraverse (T) vereinigt sind.

22. Kopfstütze nach einem der Ansprüche 1 bis 21, insbesondere nach den Ansprüchen 1 bis 3, **dadurch gekennzeichnet, daß** der Mitnehmervorsprung (M) zwischen zwei in Axialrichtung (y, z) voneinander distanzierten Axialanschlägen (17, 18) bewegbar ist.

## Claims

1. Headrest for vehicle seats comprising at least one support rod (19), which supports an upholstery carrier and of which the insertion region (E) is accommodated in a guide part (12) held in a seat back (10), wherein the insertion region (E) of the support rod (19) is accommodated in a slide bush (16) and axially adjustable relative to the slide bush (16) and releasably arrestable in axial adjustment positions, wherein the slide bush (16) in turn is accommodated in an axially movable and arrestable manner in the guide part (12) fixed in the seat back (10), **characterized in that** a driving projection (M) is held by the slide bush (16) and penetrates the guide part (12) in an axial slot (A), wherein the driving projection (M) is movable to and fro in axial direction (y, z) by means of a drive (at 28) and is to be releasably arrested in its position of abutment against an upper or outer stop (17) by means of a latch (23) held by the seat back.

2. Headrest according to claim 1, **characterized in that** the axial slot (A) extends only over an axial partial length of the guide part (12), and that the axial slot (A) forms for the driving projection (M) held by the slide bush (16) two axial stops (17, 18), which are spaced apart by the axial slot length and of which the one stop is the lower or inner axial stop (17) and the other is the upper or outer axial stop (18).

3. Headrest according to claim 1 or claim 2, **characterized in that** in the same cross section of the guide part (12) the peripheral extension of the axial slot (A) is smaller than the unslotted peripheral region of the guide part (12).

4. Headrest according to claim 2 or according to claim 3, **characterized in that** the axial regions of the guide part (12) adjoining the two axial stops (17, 18) each have a cross section closed in peripheral direction.

5. Headrest according to one of claims 1 to 4, **characterized in that** the axial slot (A) is situated predominantly in the lower or inner axial region of the guide part (12).

6. Headrest according to one of claims 1 to 5, **characterized in that** the driving projection (M) is movable by means of manual driving via an actuating element (28), such as actuating lever or actuating slide, which is disposed externally on the seat back (10).

7. Headrest according to claim 1, **characterized in that** the latch is a swivelling latch (23), which engages with a latch recess (22) under the driving projection (M).

8. Headrest according to claim 7, **characterized in that** the latch (23) is unlockable counter to spring restoring force (F).

9. Headrest according to claim 7 or according to claim 8, **characterized in** the latch (23) with the interposition of a mechanical connection (25) is actuable by means of the actuating element (28).

10. Headrest according to claim 9, **characterized in that** the mechanical connection is a control element (25), which actuates the latch (23) only in unlocking direction (v).

11. Headrest according to claim 10, **characterized in that** the latch in the form of swivelling latch (23) has a control face (36), with which a counterpart control face (35) of the control element (25) cooperates in the unlocking direction of the swivelling latch (23).

12. Headrest according to claim 11, **characterized in that** the control element forms at least one lever (25).

13. Headrest according to claim 12, **characterized in that** the control element forms a control lever (25) in the form of a two-armed lever.

14. Headrest according to one of claims 9 to 13, **characterized in that** the mechanical connection (25) situated between the actuating element (28) and the latch (23) is used also to actuate the driving projection (M).

15. Headrest according to one of claims 9 to 14, **characterized in that** the mechanical connection used to actuate the driving projection (M) is formed likewise by the control element (25), which moves the driving projection (M) only in the direction of its upper or outer stop (17).

16. Headrest according to claim 15, **characterized in that** the control element (25) is coupled by a positive-locking receiver (29), which engages under the driving projection (M), to the driving projection only in a pressure-resistant manner.

17. Headrest according to one of claims 6 to 16, **characterized in that**, in connection with a foldable seat back (10) carrying the headrest, the driving movement for the driving projection (M), in particular for the mechanical connection actuating the driving projection (M), such as e.g. for the control element (25), is derived from the folding movement of the seat back (10).

18. Headrest according to one of claims 6 to 17, **characterized in that**, in connection with a foldable seat back (10) carrying the headrest, the actuating element is formed by a seat-back latch handle (28), which actuates both the mechanical connection, in particular the control element (25), and a latch element (30) effective between seat (at 34) and foldable seat back (10).

19. Headrest according to claim 18, **characterized in that** the latch element forms a rotary catch (30), in particular a forked catch, which is mounted on the foot of the seat back (10) and cooperates with a closing bolt (34) fastened to the seat, and that from the rotation of the rotary catch (30) the actuating movement of the mechanical connection, in particular of the control element (25), is derived.

20. Headrest according to claim 19, **characterized in that** the control element, such as e.g. the control lever (25), is motionally coupled by means of a connecting rod (32) to the rotary catch (30).

21. Headrest according to one of claims 1 to 20, **characterized by** a double arrangement (see Fig. 1), which comprises two support rods (19) each comprising a guide part (12) and a slide bush (16) and in which both driving projections (M), which face one another and penetrate in each case an axial slot (A) of a guide part (12), are combined into a driving crossmember (T) connecting the two slide bushes (16) to one another.

22. Headrest according to one of claims 1 to 21, in particular according to claims 1 to 3, **characterized in that** the driving projection (M) is movable between two axial stops (17, 18) spaced apart from one another in axial direction (y, z).

## Revendications

1. Appui-tête pour sièges de véhicule, comprenant au moins une barre support (19), maintenant un support de rembourrage, dont la zone d'enfichage (E) est logée dans une partie de guidage (12) maintenue dans un dossier de siège (10), la zone d'enfichage (E) de la barre support (19) étant logée dans une douille de glissement (16) et réglable axialement par rapport à la douille de glissement (16) et susceptible d'être bloquée de façon désolidarisable en des positions de réglage axiales, la douille de glissement (16), de son côté, étant logée, de façon mobile axialement et susceptible d'être bloquée, dans la partie de guidage (12) fixée dans le dossier de siège (10), **caractérisé en ce que**, de la douille de glissement (16), est maintenue une saillie d'entraînement (M), traversant la partie de guidage (12) en passant par une fente axiale (A), la saillie d'entraînement (M) est susceptible d'être déplacée dans un sens et dans l'autre en direction axiale (y, z), à l'aide d'un dispositif d'entraînement (en 28) et, à sa position en appui sur une butée supérieure ou extérieure (17), peut être bloquée de façon désolidarisable à l'aide d'un verrou (23), maintenu côté dossier de siège.

2. Appui-tête selon la revendication 1, **caractérisé en ce que** la fente axiale (A) s'étend uniquement sur une longueur partielle axiale de la partie de guidage (12), et **en ce que** la fente axiale (A) forme deux butées axiales (17, 18), espacées l'une de l'autre par sa longueur de fente axiale, pour la saillie d'entraînement (M) maintenue par la douille de glissement (16), butées dont l'une est la butée axiale inférieure ou intérieure (17) et l'autre est la butée axiale supérieure ou extérieure (18).

3. Appui-tête selon la revendication 1 ou la revendication 2, **caractérisé en ce que**, dans la même section transversale de la partie de guidage (12), l'étendue périphérique de la fente axiale (A) est inférieure à la zone périphérique non-fendue de la partie de guidage (12).

4. Appui-tête selon la revendication 2 ou selon la revendication 3, **caractérisé en ce que** les zones axiales, limitrophes aux deux butées axiales (17, 18), de la partie de guidage (12) présentent chacune une section transversale fermée en direction périphérique.

5. Appui-tête selon l'une des revendications 1 à 4, **caractérisé en ce que** la fente axiale (A) se trouve principalement dans la zone axiale inférieure, respectivement intérieure, de la partie de guidage (12).

6. Appui-tête selon l'une des revendications 1 à 5, **caractérisé en ce que** la saillie d'entraînement (M) est déplaçable par un entraînement manuel, par l'intermédiaire d'un élément d'actionnement (28), disposé extérieurement sur le dossier de siège (10), tel qu'un levier d'actionnement ou un coulisseau d'actionnement.

7. Appui-tête selon la revendication 1, **caractérisé en ce que** le verrou est un verrou pivotant (23), saisissant par le dessous la saillie d'entraînement (M), par un évidement de verrou (22).

8. Appui-tête selon la revendication 7, **caractérisé en ce que** le verrou (23) est déverrouillable à l'encontre d'une force de rappel élastique (F).

9. Appui-tête selon la revendication 7 ou la revendication 8, **caractérisé en ce que** le verrou (23) est actionnable à l'aide de l'élément d'actionnement (28), avec interposition d'une liaison mécanique (25).

10. Appui-tête selon la revendication 9, **caractérisé en ce que** la liaison mécanique est un organe de commande (25), actionnant le verrou (23) uniquement dans la direction de déverrouillage (v).

11. Appui-tête selon la revendication 10, **caractérisé en ce que** le verrou, réalisé sous la forme de verrou pivotant (23), présente une face de commande (36), à l'aide de laquelle une face de commande conjuguée (35) de l'organe de commande (25) coopère dans le sens du déverrouillage du verrou pivotant (23).

12. Appui-tête selon la revendication 11, **caractérisé en ce que** l'organe de commande forme au moins un levier (25).

13. Appui-tête selon la revendication 12, **caractérisé en ce que** l'organe de commande forme un levier de commande (25) ayant la forme d'un levier à deux bras.

14. Appui-tête selon l'une des revendications 9 à 13, **caractérisé en ce que** la liaison mécanique (23), se trouvant entre l'élément d'actionnement (28) et le verrou (23), sert également à l'actionnement de la saillie d'entraînement (M).

15. Appui-tête selon l'une des revendications 9 à 14, **caractérisé en ce que** la liaison mécanique, servant à l'actionnement de la saillie d'entraînement (M), est également formée par l'organe de commande (25), qui déplace la saillie d'entraînement (M), uniquement vers sa butée supérieure ou extérieure (17).

16. Appui-tête selon la revendication 15, **caractérisé en ce que** l'organe de commande (25), par l'intermédiaire d'un logement à liaison par ajustement de formes (29), qui saisit par le dessous la saillie d'entraînement (M), est couplé à cette dernière, uniquement de façon rigide en pression.

17. Appui-tête selon l'une des revendications 6 à 16, **caractérisé en ce que**, en liaison avec un dossier de siège (10) rabattable, portant l'appui-tête, le mouvement d'entraînement pour la saillie d'entraînement (M), en particulier pour la liaison mécanique actionnant la saillie d'actionnement (M), tel que par exemple pour l'organe de commande (25), est dérivé du mouvement de rabattement du dossier (10).

18. Appui-tête selon l'une des revendications 6 à 17, **caractérisé en ce que**, en liaison avec un dossier de siège (10) rabattable, portant l'appui-tête, l'élément d'actionnement est formé par une poignée de verrou de dossier de siège (28), qui actionne, tant la liaison mécanique, en particulier l'organe de commande (25), qu'également un organe de verrouillage (30), agissant entre le siège (en 34) et le dossier de siège (10) rabattable.

19. Appui-tête selon la revendication 18, **caractérisé en ce que** l'organe de verrouillage forme une gâchette rotative (30), montée au pied du dossier de siège (10), en particulier une gâchette à fourche, qui coopère avec un boulon de fermeture (34) fixé sur le siège, et **en ce que** le mouvement d'actionnement de la liaison mécanique, en particulier de l'organe de commande (25), est dérivé du mouvement de rotation de la gâchette rotative (30).

20. Appui-tête selon la revendication 19, **caractérisé en ce que** l'organe de commande, tel que par exemple le levier de commande (25), est relié cinématiquement à la gâchette rotative (30), à l'aide d'un bras articulé (32).

21. Appui-tête selon l'une des revendications 1 à 20, **caractérisé par** un agencement double (voir Fig. 1), présentant deux tiges support (19), ayant chacune une partie de guidage (12) et une douille de glissement (16), agencement double pour lequel les deux saillies d'entraînement (M), tournées l'une vers l'autre, traversant chacune une fente axiale (A) d'une partie de guidage (12), sont réunies en une traverse d'entraînement (T), reliant ensemble les deux douilles de glissement (16).

22. Appui-tête selon l'une des revendications 1 à 21, en particulier selon les revendications 1 à 3, **caractérisé en ce que** la saillie d'entraînement (M) est déplaçable entre deux butées axiales (17, 18), espacées l'une de l'autre en direction axiale (y, z).
